# EUROPEAN PATENT SPECIFICATION

(11) **EP 3 416 420 B1**
(45) Date of publication and mention of the grant of the patent: **28.04.2021**
(21) Application number: 17176441.8
(22) Date of filing: 16.06.2017
(51) Int. Cl.: H04W 28/02, H04W 40/10, H04W 40/22, H04W 84/18, H04W 88/04

(54) **NETWORK OF NODES AND METHOD OF OPERATING A NETWORK OF NODES**
NETZWERK VON KNOTEN UND VERFAHREN ZUM BETRIEB EINES NETZWERKS VON KNOTEN
RÉSEAU DE NOEUDS ET PROCÉDÉ DE FONCTIONNEMENT D'UN RÉSEAU DE NOEUDS

(43) Date of publication of application: 19.12.2018
(73) Proprietor: Vestel Elektronik Sanayi ve Ticaret A.S., 45030 Manisa (TR)
(72) Inventor: KÍRÍSKEN, Barbaros, 45030 Manisa (TR)
(74) Representative: Flint, Adam

(56) References cited:
- WO-A1-2012/034607
- US-A1- 2013 121 176

## Description

### Technical Field

The present disclosure relates to a network of nodes and a method of operating a network of nodes, wherein the network is a wireless multi-hop network.

### Background

Various different topologies and detailed arrangements for wireless networks of nodes are known. Examples include so-called "star" networks and "mesh" networks.

US2013121176A1 discloses an energy-harvesting communication device of a communication network. Upon detecting that the accumulated energy surpasses a sufficient threshold, the communication device may transmit a message into the communication network using the accumulated energy as an unreliable and unsynchronized broadcast transmission to any available receiver within the communication network.

### Summary

According to a first aspect disclosed herein, there is provided a network of nodes, wherein the network is a wireless multi-hop network in which data is wirelessly transmitted between nodes and data is capable of being passed from a source node to a sink node in a multi-hop manner via one or more intermediate nodes,
at least some of the nodes being constructed and arranged such that:
a node has a threshold relating to the data that is transmitted by the node, wherein:
   if the threshold has not been reached, then the node transmits data that has been received from one node and that is intended for another node to another node, and
   if the threshold has been reached, then the node does not transmit data that has been received from one node and that is intended for another node to another node;
wherein said at least some of the nodes are arranged such that:
   the threshold is at least one of an amount of data that is transmitted by the node and an amount of power used for transmitting the data by the node, and
   the threshold is reset after a predetermined period of time.

In an example, said at least some of the nodes are arranged such that:
the node transmits its own data that is intended for another node to another node regardless of whether or not the threshold has been reached.

In an example, said at least some of the nodes are arranged such that:
if the threshold has been reached during a first predetermined period of time, then the node does not transmit data that has been received from one node and that is intended for another node to another node during the first predetermined period of time, and the node transmits its own data and the data that has been received from one node and that is intended for another node during a subsequent predetermined period of time.

In an example, said at least some of the nodes are arranged such that:
if the threshold has been reached, then the node informs a node from which data that is intended for another node has been received that the data will not be transmitted to another node.

In an example, at least some of the nodes are arranged such that if a first node is informed by a second node that data intended for another node will not be transmitted by the second node to another node, then the first node transmits the data to another node.

In an example, at least some of the nodes are arranged such that the nodes carry out measurements of wireless links to other nodes, wherein the measurements are carried out during measurement periods which are synchronised across the nodes.

In an example, said at least some of the nodes are battery-powered.

According to a second aspect disclosed herein, there is provided a method of operating a network of nodes, wherein the network is a wireless multi-hop network in which data is wirelessly transmitted between nodes and data is capable of being passed from a source node to a sink node in a multi-hop manner via one or more intermediate nodes, at least some of the nodes having a threshold relating to the data that is transmitted by the node, the method comprising for at least one of said nodes:
if the threshold has not been reached, then the node transmits data that has been received from one node and that is intended for another node to another node, and
if the threshold has been reached, then the node does not transmit data that has been received from one node and that is intended for another node to another node;
wherein:
   the threshold is at least one of an amount of data that is transmitted by the node and an amount of power used for transmitting the data by the node, said at least some of the nodes resetting the threshold after a predetermined period of time.

### Brief Description of the Drawings

To assist understanding of the present disclosure and to show how embodiments may be put into effect, reference is made by way of example to the accompanying drawings in which:
Figure 1 shows schematically a star network;
Figure 2 shows schematically a mesh network;
Figure 3 shows schematically transmission and relaying of data by a node;
Figure 4 shows schematically transmission of data by a node; and
Figure 5 shows graphs indicating transmission of data and total amount of data transmitted and/or power used for the transmission.

### Detailed Description

As mentioned, various different topologies and detailed arrangements for wireless networks of nodes are known. Examples include so-called "star" networks and "mesh" networks.

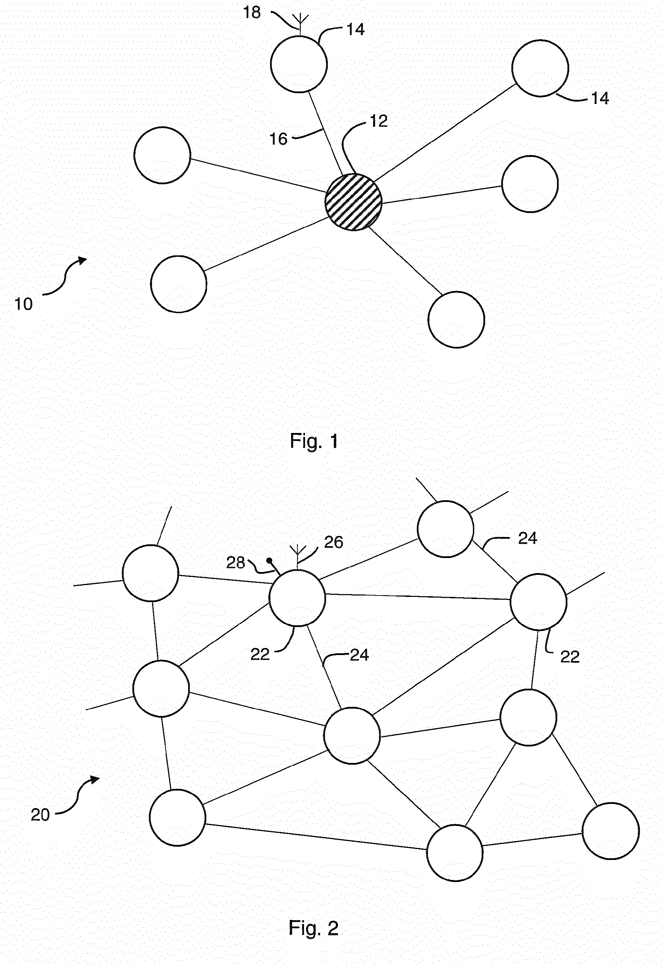

Referring to Figure 1, in its simplest form, a star topology network 10 has a single "central" node or hub 12 to which every other node 14 is connected. The connection may in general be via wired or wireless links 16. Typically the other nodes 14 are not connected to each other. The nodes 14 may in general be any device, including for example computers (whether desktop or laptops or tablets, etc.), controllers, sensors, etc., etc. As illustrated schematically in Figure 1 for one node, each node 14 in this example has an antenna 18 for wireless transmissions to and from the central hub 12, as well as a processor, data storage, a wireless transceiver, etc. (not shown) as necessary.

Referring to Figure 2, in contrast, in a mesh topology network 20, there is no "central" node. Instead, the nodes 22 operate in a point-to-point or peer-to-peer manner. Each node 22 can send and receive its own data. Also, commonly in a mesh network 20, each node 22 also relays data received from one node 22 (a source node) that is intended ultimately for another node 22 (a sink node) to another node. The data sent from a source node 22 to a sink node 22 is therefore typically transferred via other, intermediate nodes in a multi-hop manner. Mesh networks may also be referred to as multi-hop networks or heterogeneous networks or the like. The connections between nodes 22 may in general be via wired or wireless links 24. The nodes 22 may in general be any device, including for example computers (whether desktop or laptops or tablets, etc.), controllers, sensors, etc., etc. As illustrated schematically in Figure 2 for one node 22, each node 22 in this example has an antenna 26 for wireless transmissions to and from other nodes 22, as well as a processor, data storage, a wireless transceiver, etc. (not shown) as necessary. Also, in this example, at least some of nodes 22 may be sensors as indicated schematically by a sensing devices 28 for one of the nodes 22 in Figure 2. The sensor nodes 22 may in general be any type of sensor, including for example sensors for temperature, humidity, pressure, light levels, pollution levels, etc., etc.

Mesh networks have a number of advantages over star networks, particularly in certain applications. For example, even if one node fails there is always an alternative present to enable data to be routed to other nodes. Also, expansion of the network by adding nodes or making other changes to the network or existing nodes can usually be carried out without disrupting other nodes. In contrast, in a star network, if for example the central hub fails, then the whole network effectively fails. Moreover, the processing and data storage requirements for the central hub are high. In addition, adding nodes has to be carried out with care, typically requiring changes at the central hub. Finally, for wireless networks, a star network often requires high power transmitters as the nodes may be a relatively large distance from the central hub. On the other hand, in a wireless mesh network, in principle a node need only communicate with one other node, which may be closely located, such that only low power transmissions are required.

Nevertheless, a disadvantage of conventional mesh networks over star networks is that the power requirements for the individual nodes in the star network are much more predictable and consistent than in the case of nodes in a mesh network. This is because in a star network any particular node only sends its own data to the central hub, and it is often predictable as to how much data will be sent and when it will be sent. In contrast, in a mesh network, a particular node again will have its own data to send, but also has to relay data from other nodes and it can be very difficult to predict with any accuracy when and how much data any particular node has to relay for other nodes. This is a particular problem in the case of the nodes being battery-powered as it can be difficult to predict with any accuracy how long the battery will last before discharging. Battery-powered sensors and other battery-powered devices connected in a mesh network are of increasing commercial importance, including in for example "Internet of Things" or IoT devices. In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc. IoT devices may be deployed in locations or situations where there is no mains powers supply or the IoT device may not suitable for a mains power supply, including in for example the case that the IoT device is a sensor for temperature, humidity, pressure, light levels, pollution levels, etc.

In accordance with the present disclosure, this is overcome in a wireless multi-hop network, such as a mesh network, by having a threshold relating to the data that is transmitted by the nodes, or at least some of the nodes. If the threshold has not been reached, then the node transmits data that has been received from one node and that is intended for another node to another node (i.e. the node will relay data received from one node and intended for another node). If the threshold has been reached, then the node does not transmit data that has been received from one node and that is intended for another node to another node (i.e. the node will not relay data received from one node and intended for another node). This makes the power consumption requirements of the node much more predictable. Indeed, the power consumption requirements of the node may be controlled by adjusting the threshold, optionally in real-time. For example, the threshold may be reduced in response to detection of a low charge level of a battery which is powering the node. In some examples, the node transmits its own data that is intended for another node to another node regardless of whether or not the threshold has been reached. The threshold may be for example an amount of data that is transmitted by the node and/or an amount of power used for transmitting the data by the node.

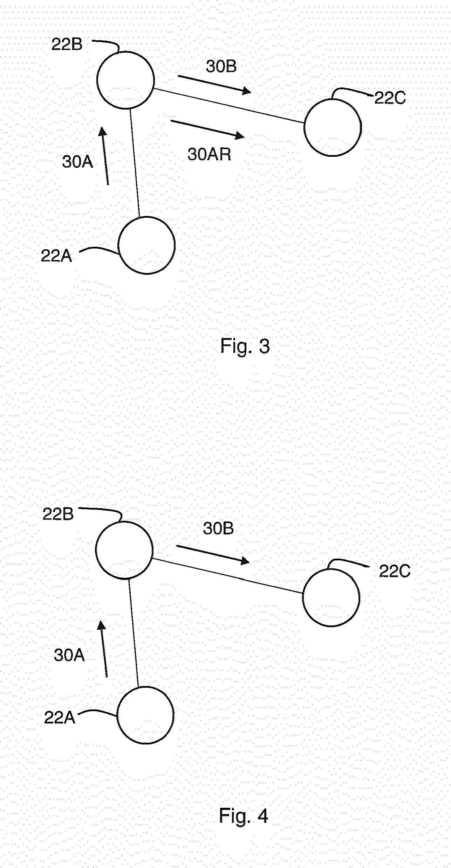

This is illustrated schematically in Figures 3 and 4, which show a portion of a mesh network like the mesh network 20 shown in Figure 2. Three nodes 22A, 22B, 22C are shown, it being understood that there will typically be more nodes and typically many more nodes than this. There may be for example tens or hundreds or thousands or more such nodes 22 in the mesh network 20. At least some and optionally all or substantially all of the nodes 22 are arranged and configured to behave as described herein. (It will be appreciated that there may be nodes 22 in the mesh network 22 that do not require this functionality, and that, depending on the network and the nature of the nodes 22, this may only be a small proportion or a large proportion.) The network 20 may be for example a Low-Power Wide-Area Network (LPWAN) and at least some of the nodes 22 may be for example battery-powered sensors or other battery-powered devices.

In Figures 3 and 4, one node 22A needs to pass data to another node 22C. In this example, this is carried out by the first node 22A wirelessly transmitting 30A the data to a neighbouring "intermediate" node 22B. The data may be data generated or obtained by the first node 22A, for example as a result of measurements of certain parameters, such that in this sense the first node 22A is a source node for the data. Alternatively or additionally, the data may be data that has been received from another node and which this node 22A is relaying.

In Figure 3, the threshold relating to the data that is transmitted by the neighbouring node 22B has not been reached. Accordingly, the neighbouring node 22B transmits and therefore relays 30AR the data received from the first node 22A onto a neighbouring node 22C. In this case, the node 22C is the sink or intended destination of the data from the first node 22A. In other examples, the node 22C may relay the data onto another node. The intermediate node 22B may also transmit 30B its own data to the neighbouring node 22C (either for the neighbouring node 22C to act as a destination or sink for that own data or for the neighbouring node 22C to relay that data onto another node).

On the other hand, in Figure 4 the threshold relating to the data that is transmitted by the neighbouring node 22B has been reached. Accordingly, the neighbouring node 22B does not transmit or relay the data received from the first node 22A. Nevertheless, as indicated, in this example the intermediate node 22B may transmit 30B its own data onto a neighbouring node 22C (again either for the neighbouring node 22C to act as a destination or sink for that own data or for the neighbouring node 22C to relay that data onto another node).

The threshold level will typically be stored locally by the nodes 22. The threshold may be the same for all nodes 22 or may be different for different nodes 22. The threshold may be fixed. Alternatively, as mentioned, the threshold may be adjusted, optionally in real-time. The threshold may for example be adjusted for all nodes 22 and/or may for example be adjusted autonomously by each node 22, depending on for example local conditions. For example, the threshold relating to the data that may be transmitted by a particular node 22 may be reduced in response to detection of a low charge level of a battery which is powering the node 22.

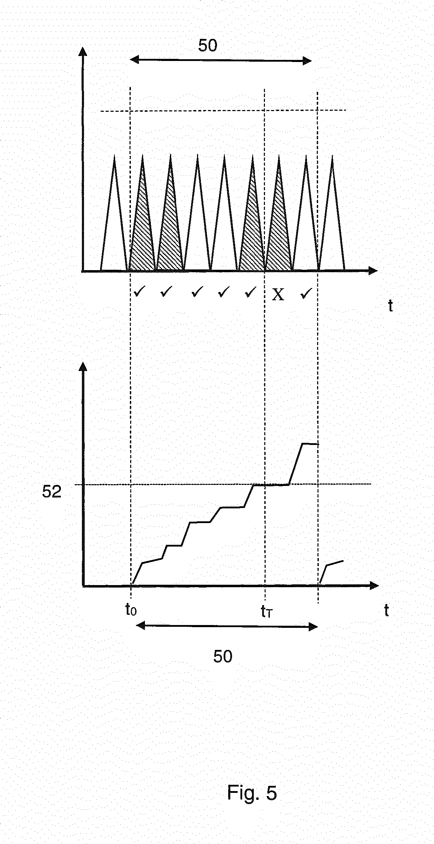

At least some of the nodes 22 may be arranged such that the threshold is reset after a predetermined period of time. This may be recurrent, i.e. the threshold is reset at periodic intervals, effectively giving rise to a time frame structure. This is indicated schematically for a node 22 in Figure 5. The upper graph of Figure 5 illustrates transmission of data from the node 22. Data that the node 22 has received from other nodes and which the node 22 is to relay onto other nodes is indicated by triangles filled with dashed lines. Data that is the node's 22 own data (for example, relating to sensor readings or the like obtained by the node 22) and which is to be transmitted to another node is indicated by plain triangles. The lower graph of Figure 5 illustrates the total amount of data that is transmitted by the node 22. The threshold for the amount of data that can be transmitted during a time period 50 is indicated at 52 in the lower graph. It may be noted that whilst the triangles in the upper graph of Figure 5 are described here as relating to the amount of data that is transmitted (e.g. measured in bytes say) and the curve in the lower graph indicates the total amount of data that is transmitted over a time period, the triangles may alternatively represent the power used by the node for the transmissions (e.g. measured in Watts) and the curve in the lower graph indicates the total amount of power that is used for transmitting the data over a time period.

Initially, at time to, the threshold for the node 22 has just been reset. Accordingly, the node 22 is able to transmit data that has been received from other nodes as well as its own data, as indicated by a tick or ✔ in the upper graph of Figure 5. As indicated in the lower graph of Figure 5, this means that the total amount of data transmitted by the node 22, or equivalently the total amount of power used for the transmissions, increases over time. At time t_{T}, the threshold 52 has been reached. Accordingly, following that, the node 22 does not transmit data that has been received from other nodes. This is indicated by a cross or X in the upper graph of Figure 5. Nevertheless, in this example, the node 22 is still able to transmit its own data, again indicated by a tick or ✔ in the upper graph of Figure 5. Then, at the end of the time period 50, the threshold is effectively reset and the node 22 is again able to transmit its own data and relay data for other nodes, at least until the threshold is reached again. As mentioned, the threshold may be reset periodically.

In an example in the case that the threshold 52 for a node 22 has been reached during a first time period 50 such that the node 22 does not transmit data that has been received from one node and that is intended for another node to another node during the first time period 50, the node 22 may nevertheless retain that data received from the one node. Then, once the threshold has been reset at the end of that time period 50, the node 22 may transmit its own data and the data that has been received from the one node and that is intended for another node during the next or some subsequent time period. The two sets of data may be sent in one transmission, which may save power, or the data may be sent in separate transmissions.

In the case that the threshold 52 for the node 22 has been reached and the node 22 receives data from a second node which it is intended should be relayed on to a third node, then the first node 22 may transmit a message or notification to the second node that the data will not be relayed or further transmitted. This enables the second node to transmit the data to another node with the intention that that other node will relay the data.

It is known for nodes in wireless networks to carry out measurements of wireless links to other nodes in the network to test the quality of the links. Factors that may be measured include for example delay, received signal strength, signal-to-noise ratio (SNR) or signal-to-interference-plus-noise ratio (SINR), packet delivery ratio, bit error rate and throughput. The measurements are carried out during so-called measurement periods. In another example of the present disclosure, the nodes 22, or at least some of the nodes 22, in the network 20 may be arranged such that the measurements are carried out during measurement periods which are synchronised across the nodes 22. This means that, during the measurement periods, less data is being sent by the nodes 22, which can help keep down the power requirements.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

## Claims

1. A network (20) of nodes (22), wherein the network (20) is a wireless multi-hop network (20) in which data is wirelessly transmitted between nodes (22) and data is capable of being passed from a source node (22) to a sink node (22) in a multi-hop manner via one or more intermediate nodes (22),
at least some of the nodes (22) being constructed and arranged such that:
a node (22) has a threshold relating to the data that is transmitted by the node (22), wherein:
if the threshold has not been reached, then the node (22) transmits data that has been received from one node (22) and that is intended for another node (22) to another node (22), and
if the threshold has been reached, then the node (22) does not transmit data that has been received from one node (22) and that is intended for another node (22) to another node (22);
wherein said at least some of the nodes (22) are arranged such that:
the threshold is at least one of an amount of data that is transmitted by the node (22) and an amount of power used for transmitting the data by the node (22), and
the threshold is reset after a predetermined period of time.

2. A network (20) of nodes (22) according to claim 1, wherein said at least some of the nodes (22) are arranged such that:
the node (22) transmits its own data that is intended for another node (22) to another node (22) regardless of whether or not the threshold has been reached.

3. A network (20) of nodes (22) according to claim 1 or claim 2, wherein said at least some of the nodes (22) are arranged such that:
if the threshold has been reached during a first predetermined period of time, then the node (22) does not transmit data that has been received from one node (22) and that is intended for another node (22) to another node (22) during the first predetermined period of time, and the node (22) transmits its own data and the data that has been received from one node (22) and that is intended for another node (22) during a subsequent predetermined period of time.

4. A network (20) of nodes (22) according to any of claims 1 to 3, wherein said at least some of the nodes (22) are arranged such that:
if the threshold has been reached, then the node (22) informs a node (22) from which data that is intended for another node (22) has been received that the data will not be transmitted to another node (22).

5. A network (20) of nodes (22) according to claim 4, wherein at least some of the nodes (22) are arranged such that if a first node (22) is informed by a second node (22) that data intended for another node (22) will not be transmitted by the second node (22) to another node (22), then the first node (22) transmits the data to a futher node (22).

6. A network (20) of nodes (22) according to any of claims 1 to 5, wherein at least some of the nodes (22) are arranged such that the nodes (22) carry out measurements of wireless links to other nodes (22), wherein the measurements are carried out during measurement periods which are synchronised across the nodes (22).

7. A network (20) of nodes (22) according to any of claims 1 to 6, wherein said at least some of the nodes (22) are battery-powered.

8. A method of operating a network (20) of nodes (22), wherein the network (20) is a wireless multi-hop network (20) in which data is wirelessly transmitted between nodes (22) and data is capable of being passed from a source node (22) to a sink node (22) in a multi-hop manner via one or more intermediate nodes (22), at least some of the nodes (22) having a threshold relating to data that is transmitted by the node (22), the method comprising for at least one of said nodes (22):
if the threshold has not been reached, then the node (22) transmits data that has been received from one node (22) and that is intended for another node (22) to another node (22), and
if the threshold has been reached, then the node (22) does not transmit data that has been received from one node (22) and that is intended for another node (22) to another node (22);
wherein:
the threshold is at least one of an amount of data that is transmitted by the node (22) and an amount of power used for transmitting the data by the node (22), said at least some of the nodes (22) resetting the threshold after a predetermined period of time.

9. A method according to claim 8, wherein the node (22) transmits its own data that is intended for another node (22) to another node (22) regardless of whether or not the threshold has been reached.

10. A method according to claim 8 or claim 9, comprising:
if the threshold has been reached during a first predetermined period of time, the node (22) does not transmit data that has been received from one node (22) and that is intended for another node (22) to another node (22) during the first predetermined period of time, and the node (22) transmits its own data and the data that has been received from one node (22) and that is intended for another node (22) during a subsequent predetermined period of time.

11. A method according to any of claims 8 to 10, comprising:
if the threshold has been reached, the node (22) informing a node (22) from which data that is intended for another node (22) has been received that the data will not be transmitted to another node (22).

12. A method according to claim 11, wherein the node (22), from which data that is intended for another node (22) was received and that is informed that the data will not be transmitted to another node (22), transmits the data to a further node (22)

13. A method according to any of claims 8 to 12, wherein at least some of the nodes (22) are battery-powered.

## Patentansprüche

1. Netzwerk (20) von Knoten (22), wobei das Netzwerk (20) ein drahtloses Multi-Hop-Netzwerk (20) ist, in dem Daten drahtlos zwischen Knoten (22) übertragen werden und Daten in einer Multi-Hop-Weise über ein oder mehr Zwischenknoten (22) von einem Quellknoten (22) zu einem Senkenknoten (22) geleitet werden können, wobei wenigstens ein paar der Knoten (22) so konstruiert und eingerichtet sind, dass:
ein Knoten (22) einen Schwellenwert betreffend die Daten hat, die vom Knoten (22) übertragen werden, wobei:
wenn der Schwellenwert nicht erreicht worden ist, dann der Knoten (22) Daten, die von einem Knoten (22) empfangen worden sind und die einem anderen Knoten (22) zugedacht sind, an einen anderen Knoten (22) überträgt, und
wenn der Schwellenwert erreicht worden ist, dann der Knoten (22) Daten, die von einem Knoten (22) empfangen worden sind und die einem anderen Knoten (22) zugedacht sind, nicht an einen anderen Knoten (22) überträgt;
wobei die wenigstens ein paar der Knoten (22) so eingerichtet sind, dass:
der Schwellenwert wenigstens eines ist von einer Datenmenge, die vom Knoten (22) übertragen wird, und einer Energiemenge, die vom Knoten (22) zum Übertragen der Daten benutzt wird, und
der Schwellenwert nach einer vorbestimmten Zeitdauer zurückgesetzt wird.

2. Netzwerk (20) von Knoten (22) nach Anspruch 1, bei welchem die wenigstens ein paar der Knoten (22) so eingerichtet sind, dass:
der Knoten (22) seine eigenen Daten, die einem anderen Knoten (22) zugedacht sind, unabhängig davon, ob der Schwellenwert erreicht worden ist oder nicht, an einen anderen Knoten (22) überträgt.

3. Netzwerk (20) von Knoten (22) nach Anspruch 1 oder Anspruch 2, bei welchem die wenigstens ein paar der Knoten (22) so eingerichtet sind, dass:
wenn der Schwellenwert während einer ersten vorbestimmten Zeitdauer erreicht worden ist, dann der Knoten (22) Daten, die von einem Knoten (22) empfangen worden sind und die einem anderen Knoten (22) zugedacht sind, während der ersten vorbestimmten Zeitdauer nicht an einen anderen Knoten (22) überträgt, und der Knoten (22) seine eigenen Daten und die Daten, die von einem Knoten (22) empfangen worden sind und die einem anderen Knoten (22) zugedacht sind, während einer anschließenden Zeitdauer überträgt.

4. Netzwerk (20) von Knoten (22) nach einem der Ansprüche 1 bis 3, bei welchem die wenigstens ein paar der Knoten (22) so eingerichtet sind, dass:
wenn der Schwellenwert erreicht worden ist, dann der Knoten (22) einen Knoten (22), von dem Daten, die einem anderen Knoten (22) zugedacht sind, empfangen worden sind, informiert, dass die Daten nicht an einen anderen Knoten (22) übertragen werden.

5. Netzwerk (20) von Knoten (20) nach Anspruch 4, bei welchem wenigstens ein paar der Knoten (22) so eingerichtet sind, dass, wenn ein erster Knoten (22) von einem zweiten Knoten (22) informiert wird, dass einem anderen Knoten (22) zugedachte Daten vom zweiten Knoten (22) nicht an einen anderen Knoten (22) übertragen werden, dann der erste Knoten (22) die Daten an einen weiteren Knoten (22) überträgt.

6. Netzwerk (20) von Knoten (22) nach einem der Ansprüche 1 bis 5, bei welchem wenigstens ein paar der Knoten (22) so eingerichtet sind, dass die Knoten (22) Messungen von drahtlosen Verbindungen zu anderen Knoten (22) durchführen, wobei die Messungen während Messperioden durchgeführt werden, die über die Knoten (22) synchronisiert sind.

7. Netzwerk (20) von Knoten (22) nach einem der Ansprüche 1 bis 6, bei welchem die wenigstens ein paar der Knoten (22) batteriebetrieben sind.

8. Verfahren zum Betreiben eines Netzwerks (20) von Knoten (22), wobei das Netzwerk (20) ein drahtloses Multi-Hop-Netzwerk (20) ist, in dem Daten drahtlos zwischen Knoten (22) übertragen werden und Daten in einer Multi-Hop-Weise über ein oder mehr Zwischenknoten (22) von einem Quellknoten (22) zu einem Senkenknoten (22) geleitet werden können, wobei wenigstens ein paar der Knoten (22) einen Schwellenwert betreffend die Daten haben, die vom Knoten (22) übertragen werden, wobei das Verfahren für wenigstens einen der Knoten (22) aufweist:
wenn der Schwellenwert nicht erreicht worden ist, dann der Knoten (22) Daten, die von einem Knoten (22) empfangen worden sind und die einem anderen Knoten (22) zugedacht sind, an einen anderen Knoten (22) überträgt, und
wenn der Schwellenwert erreicht worden ist, dann der Knoten (22) Daten, die von einem Knoten (22) empfangen worden sind und die einem anderen Knoten (22) zugedacht sind, nicht an einen anderen Knoten (22) überträgt;
wobei:
der Schwellenwert wenigstens eines ist von einer Datenmenge, die vom Knoten (22) übertragen wird, und einer Energiemenge, die vom Knoten (22) zum Übertragen der Daten benutzt wird, wobei die wenigstens ein paar der Knoten (22) den Schwellenwert nach einer vorbestimmten Zeitdauer zurücksetzen.

9. Verfahren nach Anspruch 8, bei welchem der Knoten (22) seine eigenen Daten, die einem anderen Knoten (22) zugedacht sind, unabhängig davon, ob der Schwellenwert erreicht worden ist oder nicht, an einen anderen Knoten (22) überträgt.

10. Verfahren nach Anspruch 8 oder Anspruch 9, aufweisend:
wenn der Schwellenwert während einer ersten vorbestimmten Zeitdauer erreicht worden ist, überträgt der Knoten (22) Daten, die von einem Knoten (22) empfangen worden sind und die einem anderen Knoten (22) zugedacht sind, während der ersten vorbestimmten Zeitdauer nicht an einen anderen Knoten (22), und überträgt der Knoten (22) seine eigenen Daten und die Daten, die von einem Knoten (22) empfangen worden sind und die einem anderen Knoten (22) zugedacht sind, während einer anschließenden Zeitdauer.

11. Verfahren nach einem der Ansprüche 8 bis 10, aufweisend:
wenn der Schwellenwert erreicht worden ist, informiert der Knoten (22) einen Knoten (22), von dem Daten, die einem anderen Knoten (22) zugedacht sind, empfangen worden sind, dass die Daten nicht an einen anderen Knoten (22) übertragen werden.

12. Verfahren nach Anspruch 11, bei welchem der Knoten (22), von dem Daten, die einem anderen Knoten (22) zugedacht sind, empfangen wurden und der informiert wird, dass die Daten nicht an einen anderen Knoten (22) übertragen werden, die Daten an einen weiteren Knoten (22) überträgt.

13. Verfahren nach einem der Ansprüche 8 bis 12, bei welchem wenigstens ein paar der Knoten (22) batteriebetrieben sind.

## Revendications

1. Réseau (20) de nœuds (22), dans lequel le réseau (20) est un réseau sans fil multi-saut (20) dans lequel des données sont transmises sans fil entre des nœuds (22) et dans lequel des données peuvent être transmises d'un nœud source (22) à un nœud récepteur (22) par multi-saut via un ou plusieurs nœuds intermédiaires (22),
au moins certains des nœuds (22) étant construits et disposés de telle sorte que :
un nœud (22) a un seuil relatif aux données qui sont transmises par le nœud (22), dans lequel :
si le seuil n'a pas été atteint, alors le nœud (22) transmet des données, qui ont été reçues d'un nœud (22) et sont destinées à un autre nœud (22), à un autre nœud (22) ; et
si le seuil a été atteint, alors le nœud (22) ne transmet pas de données, qui ont été reçues d'un nœud (22) et sont destinées à un autre nœud (22), à un autre nœud (22),
dans lequel lesdits au moins certains des nœuds (22) sont agencés de telle sorte que :
le seuil est au moins l'un d'une quantité de données qui sont transmises par le nœud (22) et d'une quantité d'énergie utilisée pour transmettre les données par le nœud (22) ; et
le seuil est réinitialisé après une période de temps prédéterminée.

2. Réseau (20) de nœuds (22) selon la revendication 1, dans lequel lesdits au moins certains des nœuds (22) sont agencés de telle sorte que :
le nœud (22) transmet ses propres données, qui sont destinées à un autre nœud (22), à un autre nœud (22) indépendamment de savoir si le seuil a été atteint ou pas.

3. Réseau (20) de nœuds (22) selon la revendication 1 ou 2, dans lequel lesdits au moins certains des nœuds (22) sont agencés de telle sorte que :
si le seuil a été atteint pendant une première période de temps prédéterminée, alors le nœud (22) ne transmet pas de données, qui ont été reçues d'un nœud (22) et sont destinées à un autre nœud (22), à un autre nœud (22) pendant la première période de temps prédéterminée, et le nœud (22) transmet ses propres données et les données qui ont été reçues d'un nœud (22) et sont destinées à un autre nœud (22) pendant une période de temps prédéterminée ultérieure.

4. Réseau (20) de nœuds (22) selon l'une quelconque des revendications 1 à 3, dans lequel lesdits au moins certains des nœuds (22) sont agencés de telle sorte que :
si le seuil a été atteint, alors le nœud (22) informe un nœud (22), à partir duquel des données qui sont destinées à un autre nœud (22) ont été reçues, que les données ne seront pas transmises à un autre nœud (22).

5. Réseau (20) de nœuds (22) selon la revendication 4, dans lequel au moins certains des nœuds (22) sont agencés de telle sorte que si un premier nœud (22) est informé par un deuxième nœud (22) que des données destinées à un autre nœud (22) ne seront pas transmises par le deuxième nœud (22) à un autre nœud (22), alors le premier nœud (22) transmet les données à un nœud additionnel (22).

6. Réseau (20) de nœuds (22) selon l'une quelconque des revendications 1 à 5, dans lequel au moins certains des nœuds (22) sont agencés de telle sorte que les nœuds (22) effectuent des mesures de liaisons sans fil vers d'autres nœuds (22), les mesures étant effectuées pendant des périodes de mesure qui sont synchronisées à travers les nœuds (22).

7. Réseau (20) de nœuds (22) selon l'une quelconque des revendications 1 à 6, dans lequel lesdits au moins certains des nœuds (22) sont alimentés par batterie.

8. Procédé de fonctionnement d'un réseau (20) de nœuds (22), dans lequel le réseau (20) est un réseau sans fil multi-saut (20) dans lequel des données sont transmises sans fil entre des nœuds (22) et des données peuvent être transmises d'un nœud source (22) à un nœud récepteur (22) par multi-saut via un ou plusieurs nœuds intermédiaires (22), au moins certains des nœuds (22) ayant un seuil relatif aux données qui sont transmises par le nœud (22), le procédé comprenant pour au moins l'un desdits nœuds (22) :
si le seuil n'a pas été atteint, alors le nœud (22) transmet des données, qui ont été reçues d'un nœud (22) et sont destinées à un autre nœud (22), à un autre nœud (22) ; et
si le seuil a été atteint, alors le nœud (22) ne transmet pas de données, qui ont été reçues d'un nœud (22) et sont destinées à un autre nœud (22), à un autre nœud (22),
dans lequel :
le seuil est au moins l'un d'une quantité de données qui sont transmises par le nœud (22) et d'une quantité d'énergie utilisée pour transmettre les données par le nœud (22), lesdits au moins certains des nœuds (22) réinitialisant le seuil après une période de temps prédéterminée.

9. Procédé selon la revendication 8, dans lequel le nœud (22) transmet ses propres données, qui sont destinées à un autre nœud (22), à un autre nœud (22) indépendamment de savoir si le seuil a été atteint ou pas.

10. Procédé selon la revendication 8 ou 9, comprenant :
si le seuil a été atteint pendant une première période de temps prédéterminée, le nœud (22) ne transmet pas de données, qui ont été reçues d'un nœud (22) et sont destinées à un autre nœud (22), à un autre nœud (22) pendant la première période de temps prédéterminée, et le nœud (22) transmet ses propres données et les données qui ont été reçues d'un nœud (22) et sont destinées à un autre nœud (22) pendant une période de temps prédéterminée ultérieure.

11. Procédé selon l'une quelconque des revendications 8 à 10, comprenant :
si le seuil a été atteint, le nœud (22) informe un nœud (22), à partir duquel des données qui sont destinées à un autre nœud (22) ont été reçues, que les données ne seront pas transmises à un autre nœud (22).

12. Procédé selon la revendication 11, dans lequel le nœud (22), à partir duquel des données qui sont destinées à un autre nœud (22) ont été reçues et qui est informé que les données ne seront pas transmises à un autre nœud (22), transmet les données à un nœud additionnel (22).

13. Procédé selon l'une quelconque des revendications 8 à 12, dans lequel au moins certains des nœuds (22) sont alimentés par batterie.
